# EUROPÄISCHE PATENTSCHRIFT

(11) **EP 1 102 867 B1**
(45) Veröffentlichungstag und Bekanntmachung des Hinweises auf die Patenterteilung: **04.09.2002**
(21) Anmeldenummer: 99931224.2
(22) Anmeldetag: 01.07.1999
(51) Int. Cl.: C21B 7/04, C21B 5/00, C22B 34/12, C01G 23/02, F27D 1/00

(54) **VERWENDUNG EINES BEI DER HERSTELLUNG VON TITANDIOXID ANFALLENDEN FEINKÖRNIGEN PRODUKTS**
USE OF A FINE-GRAINED PRODUCT PRODUCED DURING THE PRODUCTION OF TITANIUM DIOXIDE
UTILISATION D'UN PRODUIT A GRAINS FINS RESULTANT DE LA FABRICATION DE DIOXYDE DE TITANE

(30) Priorität: 06.07.1998 DE 19830102
(43) Veröffentlichungstag der Anmeldung: 30.05.2001
(73) Patentinhaber: Sachtleben Chemie GmbH, 47198 Duisburg (DE)
(72) Erfinder: AMIRZADEH-ASL, Djamschid, D-47445 Moers (DE); RÖDER, Wolfgang, D-47495 Rheinberg (DE); GRIEBLER, Wolf-Dieter, D-47441 Moers (DE)
(74) Vertreter: Uppena, Franz, Dr.
(86) Internationale Anmeldenummer: EP9904525
(87) Internationale Veröffentlichungsnummer: WO00001853

(56) Entgegenhaltungen:
- DE-C- 4 304 724
- DE-C- 4 419 816
- "inorganic pigments, manufacturing processes" , NOYES DATA CORPORATION , PARK RIDGE, NEW JERSEY,USA XP002119539 Seite 5 -Seite 7
- "titania slag for improving blast furnace hearth lining life" STAHL UND EISEN, Bd. 100, Nr. 17, 25. August 1980 (1980-08-25), Seite 1037 XP002023684

## Beschreibung

Die Erfindung betrifft eines bei der Herstellung von Titandioxid nach dem Chloridverfahren, bei dem titanhaltiger Rohstoff mit gasförmigem Chlor und in Anwesenheit von kohlenstoffreicher Substanz, vorzugsweise Kohle und/oder Koks, in einem Chlorierungsreaktor, vorzugsweise mit Fließbett, zu Titantetrachlorid umgesetzt wird, anfallenden feinkörnigen Produkt mit einer Körnung 100% < 5mm und einer Zusammensetzung im getrockneten Zustand von
10 bis 80 Gew.-% TiO₂
20 bis 60 Gew.-% Kohle und
5 bis 20 Gew.-% SiO₂.

Beim Chloridverfahren werden Titanerze oder "Titanschlacken" chloriert, indem in einem Chlorierungsreaktor der titanhaltige Rohstoff mit gasförmigem Chlor unter Zusatz von kohlenstoffreicher Substanz, insbesondere von Koks, beispielsweise in einer zirkulierenden Wirbelschicht, zu Titantetrachlorid umgesetzt wird. Durch einen Destillationsprozeß wird die dabei gebildete Flüssigkeit von allen Begleitstoffen befreit, so daß ein sehr reines Ausgangsprodukt für den weiteren Prozeß zur Verfügung steht. In einem Brenner wird dann das Titantetrachlorid unter Sauerstoffzuführung zu Titandioxid umgesetzt (INORGANIC PIGMENTS, Manufacturing Processes, Noyes Data Corporation, Park Ridge, New Jersey, USA, 1980, Seiten 5 bis 7).

Bei diesem Prozeß fällt im Entstaubungsfilter ein Teil des nicht umgesetzten titanhaltigen Rohstoff/Kohle- und/oder Koks-Gemisches an, das als Hauptbestandteile
10 bis 80 Gew.-% TiO₂
20 bis 60 Gew.-% Kohle
ggf. 5 bis 20 Gew.-% SiO₂
mit einer Körnung von 100 % < 5 mm enthält.

Da dieses feinkörnige Produkt die Durchführung der weiteren Behandlung des Titantetrachlorids behindern würde, wird das feinkörnige Produkt aus dem Verfahren entfernt und deponiert oder auf andere Weise entsorgt.

In der DE 4304724 C1 ist die Verwendung eines titanhaltigen Zuschlagstoffes zur Erhöhung der Haltbarkeit der feuerfesten Ausmauerung eines Ofens beschrieben. Der Zuschlagstoff besteht aus einer pulverförmigen Mischung von Rückständen der TiO₂-Herstellung und einem oder mehreren Bestandteilen, ausgewahlt aus Kohle, Eisen, Eisenoxid oder aus ihren Rückständen.

Im Hinblick darauf, daß die Bereitstellung von Deponieraum oder eine anderweitige Entsorgung mit relativ hohen Kosten verbunden sind und in dem Bestreben, Abfallstoffe einer wirtschaftlichen Verwertung zuzuführen, liegt der vorliegende Anmeldung die Aufgabe zugrunde, die Möglichkeit einer wirtschaftlichen Nutzung des vorstehend beschriebenen feinkörnigen Produkts zusammen mit der Nutzung des bei der Dünnsäurerückgewinnung entstehenden Filtersalzes (Eisensulfat) aufzuzeigen.

Die Lösung dieser Aufgabe besteht in der Verwendung eines bei der Herstellung von Titandioxid nach dem Chloridverfahren, bei dem titanhaltiger Rohstoff mit gasförmigem Chlor und in Anwesenheit von kohlenstoffreicher Substanz, vorzugsweise Kohle und/oder Koks, in einem Chlorierungsreaktor, vorzugsweise mit Fließbett, zu Titantetrachlorid umgesetzt wird, anfallenden feinkörnigen Produkts mit einer Körnung von 100 % < 5 mm, bestehend im getrockneten Zustand aus den Hauptbestandteilen
10 bis 80 Gew.-% TiO₂
20 bis 60 Gew.-% Kohle und
5 bis 20 Gew.-% SiO₂
in Mischung mit
20 bis 80 Gew.-% Eisensulfat enthaltendes Filtersalz, welches bei der Dünnsäureruckgewinnung entsteht,
0 bis 60 Gew.-% TiO₂-enthaltende Rückständen aus der TiO₂-Herstellung nach dem Sulfatverfahren,
0 bis 20 Gew.-% Kohle,
0 bis 20 Gew.-% Schwefel
0 bis 50 Gew.-% Ilmenit/TiO₂-Schlacke,
wobei diese Mischung in einem Wirbelschichtofen oder Drehrohrofen bei Temperaturen von 900 bis 1.300 °C behandelt wird,
als Zuschlagstoff zur Verbesserung der Haltbarkeit der Ausmauerung eines Ofens für die schmelzmetallurgische Erzeugung metallischer Werkstoffe.

Der Zuschlagstoff kann in Pulverform oder in Form von ein oder mehrere der Bindemittel Portlandzement, Hochofenzement, Tonerdezement, Elektrofilterasche, Bitumen und Melasse enthaltenden Briketts, Pellets oder Granulaten vorliegen. Der Zuschlagstoff läßt sich auch in Form von Sinter einsetzen.

Bevorzugt wird dem Gemisch, welches bereits Kohle enthält, noch weitere Kohle bzw. kohlenhaltige Rückstände zugesetzt, so daß das Eisensulfat (Filtersalz) zu Eisenoxid reduziert wird.

Die Erfindung ist nachfolgend anhand eines Ausführungsbeispiels näher erläutert.

### Ausführungsbeispiel

In einer Mischanlage werden 20 Gew.-% eines bei der Herstellung von TiO₂ nach dem Chloridverfahren anfallenden feinkörnigen Produkts mit einer Feuchte von 25 Gew.-% und der analytischen Zusammensetzung,
33 Gew.-% Koks
32 Gew.-% TiO₂
7 Gew.-% SiO₂
mit 50 Gew.-% Filtersalzen (Eisensulfat) aus der Dünnsäurerückgewinnung mit einem Feuchtigkeitsgehalt von 4,2 Gew.-%, einem Fe₂SO₄-Gehalt von 38 Gew.-% und einem TiO₂-Gehalt von 2,6 Gew.-%, mit 4 Gew.-% Abbrand (Fe₂O₃) aus der Schwefelsäureproduktion mit einem Fe₂O₃-Gehalt von 69 Gew.-% und einem TiO₂-Gehalt von 8 Gew.-%, mit 4 Gew.-% Feinkohle und mit 20 Gew.-% Schwefel zu einem homogenen Gemisch verarbeitet. Das Gemisch wird einem Ofen mit stationärer Wirbelschicht aufgegeben und bei einer Temperatur von ca. 1.000 °C thermisch behandelt. Das aus dem Wirbelschichtofen ausgetragene pulverförmige Produkt mit einer Körnung von 100 % < 5 mm enthält als Hauptbestandteile
29 Gew.-% TiO₂
24 Gew.-% Fe₂O₃ und
4 Gew.-% SiO₂.
Der Zusatz von Schwefel dient sowohl als Energiequelle als auch zur Einstellung der erforderlichen Schwefeldioxidkonzentration im Abgas. Das bei der thermischen Behandlung des Gemisches entstandene Schwefeldioxid wird aus dem Wirbelschichtofen abgezogen und zur Herstellung von Schwefelsäure benutzt. Das auf diese Weise erzeugte Produkt kann in vorteilhafterweise einem metallurgischem Prozeß zugeführt werden.

## Patentansprüche

1. Verwendung eines bei der Herstellung von Titandioxid nach dem Chloridverfahren, bei dem titanhaltiger Rohstoff mit gasförmigem Chlor und in Anwesenheit von kohlenstoffreicher Substanz, vorzugsweise Kohle und/oder Koks, in einem Chlorierungsreaktor, vorzugsweise mit Fließbett, zu Titantetrachlorid umgesetzt wird, anfallenden feinkörnigen Produkts mit einer Körnung von 100 % < 5 mm, bestehend im getrockneten Zustand aus den Hauptbestandteilen
10 bis 80 Gew.-% TiO₂
20 bis 60 Gew.-% Kohle und
5 bis 20 Gew.-% SiO₂
in Mischung mit
20 bis 80 Gew.-% Eisensulfat enthaltendes Filtersalz, welches bei der Dünnsäurerückgewinnung entsteht,
0 bis 60 Gew.-% TiO₂-enthaltende Rückständen aus der TiO₂-Herstellung nach dem Sulfatverfahren,
0 bis 20 Gew.-% Kohle,
0 bis 20 Gew.-% Schwefel
0 bis 50 Gew.-% Ilmenit/TiO₂-Schlacke,
wobei diese Mischung in einem Wirbelschichtofen oder Drehrohrofen bei Temperaturen von 900 bis 1.300 °C behandelt wird,
als Zuschlagstoff zur Verbesserung der Haltbarkeit der Ausmauerung eines Ofens für die schmelzmetallurgische Erzeugung metallischer Werkstoffe.

## Claims

1. Use of a fine-grained product with a grain size of 100 % < 5mm that is obtained during the production of titanium dioxide according to the chloride method, in which titanium-containing raw material is reacted with gaseous chlorine and in the presence of a carbon-rich substance, preferably coal and/or coke, in a chlorination reactor, preferably with a fluidized bed, to form titanium tetrachloride, the fine-grained product consisting, in the dried state, of the main constituents
10 to 80 % by weight TiO₂,
20 to 60 % by weight coal, and
5 to 20 % by weight SiO₂,
mixed with
20 to 80 % by weight filter salt that contains iron sulphate and which is formed during the recovery of dilute acid,
0 to 60 % by weight residues containing TiO₂ from TiO₂-production according to the sulphate method,
0 to 20 % by weight coal,
0 to 20 % by weight sulphur,
0 to 50 % by weight ilmenite/TiO₂-slag,
with this mixture being treated in a fluidized bed furnace or rotating tubular furnace at temperatures of 900 to 1,300°C,
as a flux for the purpose of improving the durability of the brick lining of a furnace for the smelting-metallurgical production of metallic materials.

## Revendications

1. Utilisation d'un produit sous forme de grains fins ayant une granulométrie où 100 % des particules ont une taille < 5 mm, résultant de la fabrication de dioxyde de titane selon le procédé au chlorure, dans lequel on fait réagir dans un réacteur de chloration, de préférence en lit fluidisé, une matière première contenant du titane avec du chlore gazeux en présence d'une substance riche en carbone, de préférence en présence de charbon ou de coke, de manière à obtenir du tétrachlorure de titane, lequel produit est, à l'état sec, constitué des composants principaux suivants :
10 à 80 % en poids de TiO₂,
20 à 60 % en poids de charbon, et
5 à 20 % en poids de SiO₂,
en mélange avec de 20 à 80 % en poids d'un sel de filtration contenant du sulfate de fer formé lors de la récupération d'acide dilué, avec de 0 à 60 % en poids d'un résidu contenant du TiO₂ provenant d'un procédé de fabricâtion de TiO₂ aux sulfates, avec de 0 à 20 % en poids de charbon, avec de 0 à 20 % en poids de soufre, avec de 0 à 50 % en poids de ilménite/scories de TiO₂, ce mélange étant traité dans un four à lit fluidisé ou dans un four tubulaire rotatif à une température de 900 à 1300 °C, en tant qu'additif pour améliorer la stabilité du garnissage d'un four pour la production métallurgique de matériaux métalliques par fusion.
